# EUROPEAN PATENT APPLICATION

(11) **EP 4 099 234 A1**
(43) Date of publication of application: **07.12.2022**
(21) Application number: 21205484.5
(22) Date of filing: 29.10.2021
(51) Int. Cl.: G06N 20/00

(54) **UNCERTAINTY DETERMINATION**

(30) Priority: 03.06.2021 US 202117338243
(71) Applicant: Business Objects Software Ltd., Dublin 24 (IE)
(72) Inventor: LE BIANNIC, Yann, 69190 Walldorf (DE); SEAN, Savaneary, 69190 Walldorf (DE)
(74) Representative: Müller-Boré & Partner Patentanwälte PartG mbB

(57) **Abstract**

A method, a system, and a computer program product for determining uncertainties associated with a predictive modeling environment executed by computing systems. A dataset that includes a plurality of variables associated with one or more values is received for training a predictive model. The predictive model is trained using the received dataset and applied to one or more variables in the received dataset to generate a prediction. One or more uncertainty intervals corresponding to one or more contributions of one or more missing values corresponding to one or more variables in the plurality of variables are generated. One or more uncertainty intervals corresponding to one or more contributions of one or more rare values corresponding to one or more variables in the plurality of variables are generated. An alert indicative of the prediction is generated based on the one or more generated uncertainty intervals.

## Description

### TECHNICAL FIELD

This disclosure relates generally to data processing and, in particular, to determination of uncertainty of rare and/or missing values in predictions generated by machine learning models.

### BACKGROUND

Machine learning (ML) models generate predictions, even when observed variables have rare or missing values. The rarity or absence of a variable value may have various causes, including root causes. For example, a score on a test may sometimes be missing in the input variables of a dataset used to train a model whose target is the risk of default on a student loan. A frequent cause of missing test scores might be that some individuals who got a low score may be reluctant to disclose it. If low test scores are related to a higher risk, then a ML model trained from such a dataset may assign a high contribution to missing test scores. Similarly, rare categories in a nominal variable may be related to a common cause and lead a ML model to generalize from the rarity of a category.

However, missing and/or rare values can also occur randomly, without any causal relationship to the target, such as, for example, in situation where a loan applicant cannot remember the exact score in response to a question about the score, or where s/he declares a rare occupation or country of origin, etc. In this case, a typical ML model may generalize from little (e.g., a rare category) and/or no (e.g., a missing value) evidence. Thus, quantification of uncertainty of rare and/or missing values that may be occurring randomly in a training population may be useful in generating alerts about ML predictions that include such values as input.

### SUMMARY

In some implementations, the current subject matter relates to a computer implemented method for determination of uncertainty of rare and/or missing values in predictions generated by machine learning model. The method may include receiving, by at least one processor, a dataset for training a predictive model. The dataset may include a plurality of variables associated with one or more values. The predictive model may be configured for determination of a target value as a function of one or more variables in the plurality of variables. The method may also include training, by the processor, the predictive model using the received dataset, applying the predictive model to one or more variables in the received dataset to generate a prediction. The method may further include generating based on the applying, one or more uncertainty intervals corresponding to one or more contributions of one or more missing values corresponding to one or more variables in the plurality of variables, and generating based on the applying, one or more uncertainty intervals corresponding to one or more contributions of one or more rare values corresponding to one or more variables in the plurality of variables. An alert indicative of the prediction may be generated based on the one or more generated uncertainty intervals.

Non-transitory computer program products (i.e., physically embodied computer program products) are also described that store instructions, which when executed by one or more data processors of one or more computing systems, causes at least one data processor to perform operations herein. Similarly, computer systems are also described that may include one or more data processors and memory coupled to the one or more data processors. The memory may temporarily or permanently store instructions that cause at least one processor to perform one or more of the operations described herein. In addition, methods can be implemented by one or more data processors either within a single computing system or distributed among two or more computing systems. Such computing systems can be connected and can exchange data and/or commands or other instructions or the like via one or more connections, including but not limited to a connection over a network (e.g., the Internet, a wireless wide area network, a local area network, a wide area network, a wired network, or the like), via a direct connection between one or more of the multiple computing systems, etc.

The details of one or more variations of the subject matter described herein are set forth in the accompanying drawings and the description below. Other features and advantages of the subject matter described herein will be apparent from the description and drawings, and from the claims.

### BRIEF DESCRIPTION OF THE DRAWINGS

The accompanying drawings, which are incorporated in and constitute a part of this specification, show certain aspects of the subject matter disclosed herein and, together with the description, help explain some of the principles associated with the disclosed implementations. In the drawings,
FIG. 1 illustrates an exemplary system for performing determination of a level of uncertainty of a contribution of a rare and/or missing value and generating an indication for how such uncertainty may affect an outcome of a machine learning model as applied to a dataset, according to some implementations of the current subject matter;
FIG. 2 illustrates an exemplary process for determining a level of uncertainty of a contribution assigned to a variable contained in an input dataset whose value is missing or rare, according to some implementations of the current subject matter;
FIG. 3 is an exemplary plot of a distribution of contributions assigned to a single variable in regard to a predicted outcome;
FIG. 4 is an exemplary experimental plot illustrating, for a given contribution value assigned to a rare category, a distribution of potentially actual contributions of such category, according to some implementations of the current subject matter;
FIG. 5 is a diagram illustrating an exemplary system including a data storage application, according to some implementations of the current subject matter;
FIG. 6 is a diagram illustrating details of the system of FIG. 5;
FIG. 7 illustrates an exemplary system, according to some implementations of the current subject matter; and
FIG. 8 illustrates an exemplary method, according to some implementations of the current subject matter.

### DETAILED DESCRIPTION

To address the deficiencies of currently available solutions, one or more implementations of the current subject matter provide for an ability to analyze uncertainty associated with using rare and/or missing values as input to generate a predicted outcome and generate alerts about such predictions.

Existing artificial intelligence (AI) frameworks (e.g., eXplainable AI (XAI) frameworks) do not provide an uncertainty interval for the contribution of a rare or missing value. When such existing predictive models generate an uncertainty interval for a prediction, they fail to indicate a source of the uncertainty or alert about the specific uncertainty associated with rare and/or missing values. For example, a predictive model may be 95% accurate on a validation dataset, however, all errors may be the result of using rare/missing values. In this case, any prediction made by the model might be described as 95% accurate, whereas the system should specifically alert an end-user about the limited accuracy of predictions generated from rare/missing values. This distinction may become critical in cases where outcomes generated by predictive models are used to make decision which impact humans, vital computing systems, and/or other aspects of healthcare, economy, etc.

In some implementations, the current subject matter may be configured to ascertain uncertainty associated with missing/rare values that may be used in generation of predictions by machine learning models. In some exemplary, non-limiting implementations, the current subject matter may use the XAI framework (e.g., SHAP framework integrated in the SAP HANA Automated Predictive Library (APL), as available from SAP AG, Walldorf, Germany) to extract individual variable contributions from a predictive model applied on a set of observations. As can be understood any explanation framework extracting local contributions may be used.

For the purposes of determining uncertainty associated with missing/rare values, the current subject matter system may assume that X may be an input variable of a predictive model, and O may be an observation. If the value of X is missing for O, the current subject matter may generate an assumption that the value may be randomly missing. Thus, a distribution of contributions of the missing value may match a distribution of contributions for X in a sample population. From this distribution, an uncertainty interval for the contribution of a randomly missing value may be determined.

If X has a rare value V (e.g., a rare category if X is nominal), its contribution C to the model may be extracted using the XAI framework. The assumption that rare values may occur randomly and that the machine learning process may be generalized from few training occurrences may be used to justify uncertainty intervals determination. Using the assumption that a value in a dataset may be rare due to a chance, contributions that would have been assigned to the value's category may be estimated by executing a simulation on frequent categories available in the dataset. The estimation may include generating another version of the dataset where one or more of the frequent categories of one variable are replaced by fake rare categories. For example, if X is a country, some original countries (e.g., "USA") may be replaced with fake rare categories (e.g., "USA_2" for a rare category occurring at least twice). A predictive model may be trained using the altered dataset and contributions generated for both the original and altered version of the dataset may be extracted using the XAI framework. First, contributions generated for the actual X values (i.e., actual contributions) may be determined, and then contributions generated for the fake rare values (i.e., simulated contributions) may be determined. For a simulated contribution C, assigned to a fake category V' derived from a source category V, all actual contributions C assigned to category V may be considered in determination of its distribution. A distribution of potentially actual contributions (i.e., contributions that would have been assigned to the category if it had not been rare) for any given contribution assigned to a rare value may be obtained. This may provide an uncertainty interval for any contribution of a rare value, conditioned on the extracted contribution and the frequency of the value.

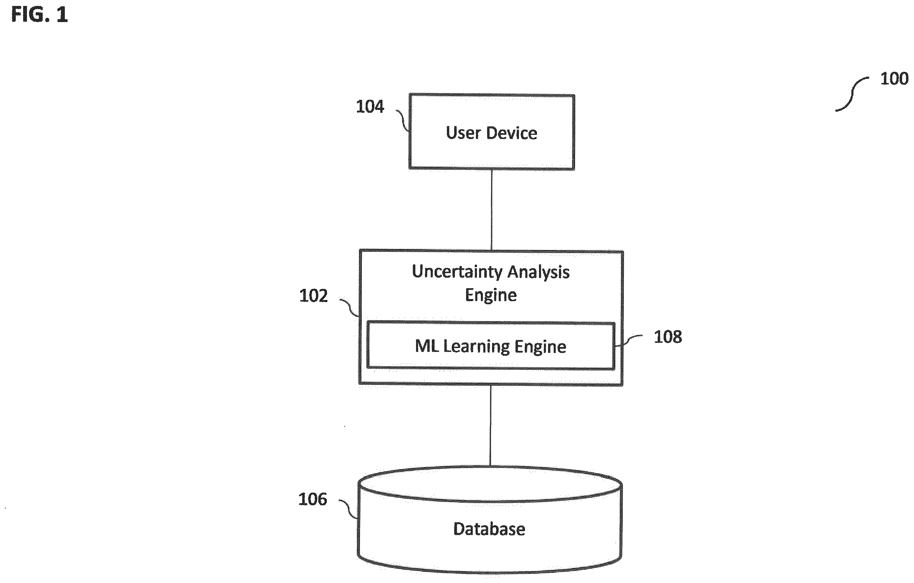

FIG. 1 illustrates an exemplary system 100 for performing determination of uncertainty associated with using rare and/or missing values as input to generate a predicted outcome and to indicate how such uncertainty may affect an outcome generated by a machine learning model when applied on a dataset, according to some implementations of the current subject matter. The system 100 may include an analysis engine and/or computing platform 102, which may include a machine learning component 108, one or more user devices 104, and a storage/database component 106. Components 102-108 may be communicatively coupled using one or more communications networks. The communications networks can include at least one of the following: a wired network, a wireless network, a metropolitan area network ("MAN"), a local area network ("LAN"), a wide area network ("WAN"), a virtual local area network ("VLAN"), an internet, an extranet, an intranet, and/or any other type of network and/or any combination thereof.

The components 102-108 may include any combination of hardware and/or software. In some implementations, components 102-108 may be disposed on one or more computing devices, such as, server(s), database(s), personal computer(s), laptop(s), cellular telephone(s), smartphone(s), tablet computer(s), and/or any other computing devices and/or any combination thereof. In some implementations, the components 102-108 may be disposed on a single computing device and/or can be part of a single communications network. Alternatively, the components may be separately located from one another.

A user may access the system 100 via a user device 104. The user device 104 may be used to execute various processes relating to determination of uncertainty associated with rare/missing values and its impact on an outcome generated by a machine learning model after applying it on a particular dataset. The device 104 may include one or more data input components that may allow entry of various data. In some implementations, the data may be queried by the user device 104 from one or more third party databases. The user device 104 may be used to generate a query and transmit it to the engine 102, which may determine which database may contain requisite information and then connect with that database to execute a query and retrieve appropriate information. In some implementations, the engine 102 may include various machine learning capabilities (e.g., may use XAI framework), application programming interfaces (APIs) and/or communication interfaces that may allow interfacing between user devices 104, databases, and/or any other components.

One or more users using devices 104 may access the system 100. The users may be individual users, computing devices, software applications, objects, functions, and/or any other types of users and/or any combination thereof. Upon obtaining datasets for analysis, the engine 102 may be instructed to process the obtained data and/or extract any additional data from one or more databases component 106, and perform analysis of the received data. The instruction/command to the engine 102 may be in a form of a query, a function call, and/or any other type of instruction/command. In some implementations, the instructions/commands may be provided using a microphone (either a separate microphone or a microphone imbedded in the user's computing device), a speaker, a screen (e.g., using a touchscreen, a stylus pen, and/or in any other fashion), a keyboard, a mouse, a camera, a camcorder, a telephone, a smartphone, a tablet computer, a personal computer, a laptop computer, and/or using any other device. The user device 104 may also instruct the engine 102 to perform an analysis of the data that may exist in the system 100 (e.g., stored in the database 106) and/or inputted via the data device 104. The analysis may implement various machine learning techniques, as further discussed below.

Any means may be used to obtain data for the purposes of the analysis performed by engine 102, where the means may include one or more of the following: a microphone (either a separate microphone or a microphone imbedded in the user device), a speaker, a screen (e.g., using a touchscreen, a stylus pen, and/or in any other fashion), a keyboard, a mouse, a camera, a camcorder, a telephone, a smartphone, a tablet computer, a personal computer, a laptop computer, and/or using any other device. The engine 102 may also obtain data from various third party sources. In some implementations, engine 102 may be communicatively coupled to various public and/or private databases that may store various information.

The engine 102 may process input (e.g., query) and/or data received from the user device 104 and access the database 106 to obtain relevant data that may be stored in the database 106. The database 106 may store information in various formats, e.g., table format, column-row format, key-value format, etc. (e.g., each key may be indicative of various attributes and each corresponding value may be indicative of attribute's value).

In some implementations, the database 106 may store a plurality of tables that may be accessed through the query generated by the engine 102. The tables may store different types of information, where tables may be updated as a result of an update to other tables.

The engine 102 may perform analysis of the obtained data, including past data, continuously supplied data, and/or any other data (e.g., a statistical analysis, machine learning analysis, etc.) and may generate an indication of the uncertainty of the contribution assigned to one or more rare/missing values to predict an outcome as a result of the machine learning processes executed by the engine 102. The engine 102 may perform such analysis/assessment once and/or on a continuous basis, e.g., when updated data is supplied to the engine 102, the engine 102 can perform analysis and re-assessment of the previous uncertainty indication. In performing its analysis, the engine 102 may also generate additional queries to obtain further information. Upon completion of its analysis, the engine 102 may be configured to generate an alert, for example, a sound alert, a visual alert (displayed on a user interface), and/or any other alert.

The following is a detailed discussion of a machine learning process performed by the engine 102 to execute an uncertainty analysis of data that may include rare/missing values.

As stated above, various machine learning models generate predictions, even when evidence from categorical variables is scarce. A typical categorical variable may be represented by categories with heterogeneous frequencies. The categories of a nominal variable may follow a Pareto distribution (a power-law probability distribution for describing, for example, social, quality control, scientific, geophysical, actuarial, and other observable phenomena), i.e., a few categories may have a high frequency in the training data, and provide strong evidence to train a model, while other categories may be rare or even missing when the model is applied to new data. In the Pareto distribution, approximately 80% of the categories may be found in approximately 20% of the observations. In some cases, a categorical variable may have missing values. For a machine learning algorithm, missing or rare categories are considered data. The rarity of a category or whether a categorical variable is missing may convey semantics. For example, if the purpose of a model is to predict a propensity to fully repay a loan, and if a variable describes the applicant's occupation, a missing occupation may mean that the applicant has no current source of income. It may also happen that most uncommon occupations may be related to unstable jobs. A typical machine learning model may generalize from missing variable(s) and/or rare categories. Such values may be missing and/or rare due to, for example, entirely random causes, chance, etc. However, the possibility that a value is missing/rare due to such causes cannot be excluded. Similarly, in real life, one rare category R might not follow the same patterns as other rare categories. If the training dataset was arbitrarily large, a machine learning algorithm may have enough observations about category R to determine its specific patterns, but in most applications, a machine learning model may be trained from limited instances of the rare category.

To train a classification model, a dataset may be divided into a training set and a validation set. The training data set may be used to train the model and the validation set may be used to control bias/variance tradeoff(s) when training the model. The model inputs may include a categorical variable X and any other variables.

In some implementations, contributions assigned by the predictive model to each variable may be extracted. By way of a non-limiting example, a SHAP XAI framework, as identified above, may be used to determine contributions. However, any other frameworks may be used.

The contributions from X in the predictive model may also be close to the actual effect in cases of frequent categories. However, these contributions may be inaccurate for rare categories, e.g., they may significantly diverge from the actual effect on the target.

In some implementations, in order to determine the uncertainty of the contribution assigned by a predictive model to rare and/or missing categories/values in order to generate a predicted outcome, the current subject matter may assume that a value is rare and/or missing due to random causes, chance, etc. If a category is missing (or unknown) and/or rare, the current subject matter may be configured to avoid applying to them the general patterns, which may be applicable to known/frequent categories. Instead, the current subject matter system may be configured, in case of missing values, to use all contributions generated for the categorical variable to determine uncertainty intervals. In case of rare values, the current subject matter may be configured to execute a simulation to determine an uncertainty interval based on contributions generated for frequent categories and their derived fake rare categories.

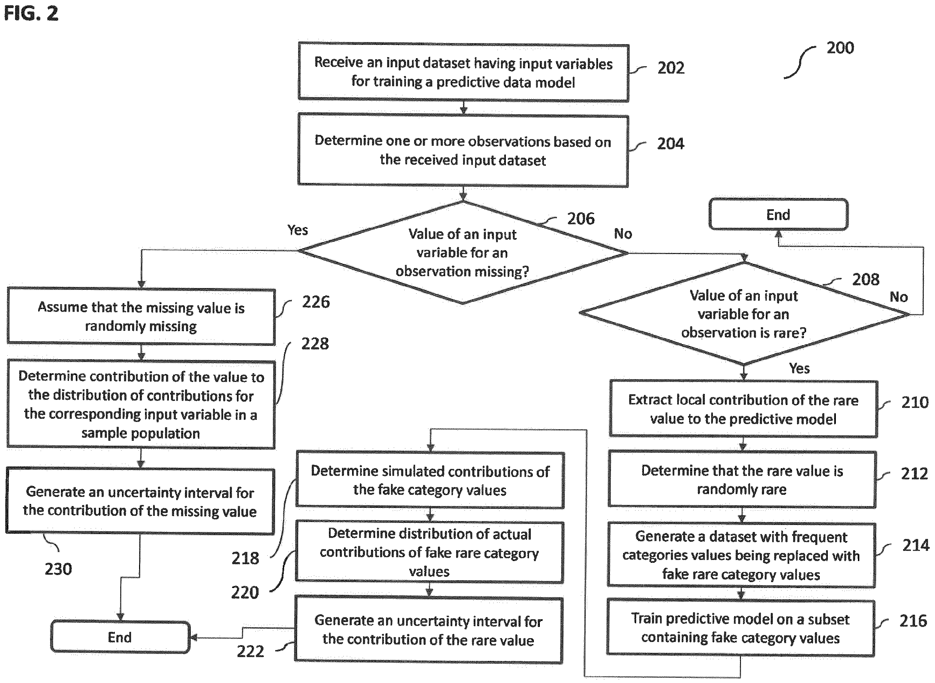

FIG. 2 illustrates an exemplary process 200 for determining the level of uncertainty of the contribution assigned to a variable in regards to a prediction generated by a predictive model, according to some implementations of the current subject matter. The variable may have a value that may be missing and/or unknown and/or otherwise be a rare value (e.g., in a rare category). The process 200 may be executed by a computing processor, such as an uncertainty analysis engine 102 shown in FIG. 1. The dataset may be obtained from the database 106 and/or provided by the user 104. The dataset may be structured in a table format and/or in any desired way.

Referring to FIG. 2, at 202, an input dataset having one or more input variables may be received by (e.g., transmitted to) the uncertainty analysis engine 102 (shown in FIG. 1). The input dataset may be used for training a predictive model. The model may be used for analyzing and/or predicting a particular outcome (e.g., generating a target value or result). One or more variables in the input dataset may have a value for an observation, which may be determined, at 204.

At 206, the uncertainty analysis engine 102 may be configured to determine whether a value of a particular input variable of a particular observation may be missing. For example, the value might not have been entered (either intentionally or unintentionally), determined, and/or might not exist. Alternatively, or in addition to, the value may be not known by the predictive model, e.g., a value which was not present in the training set.

If the value is determined to be missing, the process 200 proceeds to 226, where the engine 102 may determine and/or assume that the value is randomly missing. Alternatively, or in addition to, the engine 102 may be configured to assume that such unknown values and/or categories might not have been encountered in the received training input dataset. Further, a missing value may be treated as a special case of an unknown category, where if a value of a particular variable is missing it may mean that little or no data is available about that variable. Moreover, the missing value may be a special case of an unknown category because such value might have a specific value, i.e., the predictive model is not trained on it.

At 228, the engine 102 may be configured to determine an uncertainty interval based on the distribution of contributions of all values of a variable. In some implementations, an uncertainty interval may be estimated for all missing/unknown values. The uncertainty interval may be determined based on the distribution of the contributions of all values of a variable. When applying the predictive model on observations having missing/unknown categories, the predictive model may attribute a contribution to them (e.g., may assign a contribution to the values of a variable, even if missing or rare). Any unknown categories, i.e., categories that were never encountered in the input training dataset, may be assigned a significant contribution to the predictive model. Using the predictive model, the engine 102 may make predictions using categories it never encountered. For example, two unknown and yet distinct categories might not be distinguishable, thereby assigning similar contributions by the predictive model, even though their real contributions might be significantly different. The following code and exemplary experimental Table 1 below illustrate this for an input variable X in the input dataset (here, an exemplary sample dataset was used).

```
       train[np.isin(train['X'], unknown_categories['X'])]
       Empty DataFrame
       Columns: [X, effect, other_variables, target]
       Index: []
      predicted[np. isin(predicted[X], unknown_categories['X'])]
```

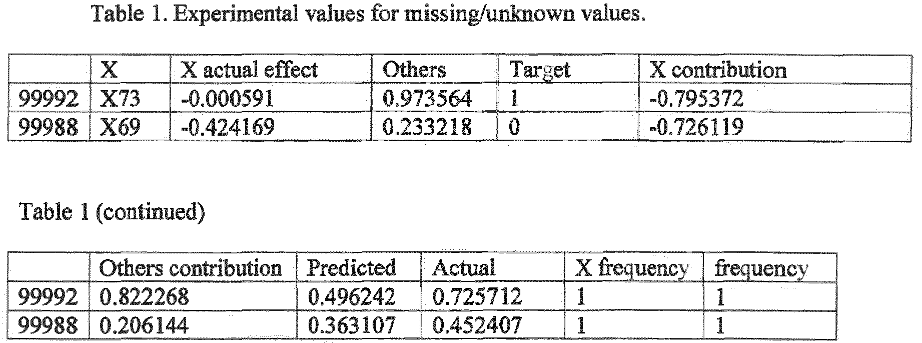

The above Table 1 indicates values for various exemplary effects for the input variable X, X's contribution (i.e., how it may affect target values), as well as contributions (predicted and actual) of other variables in the dataset). Here, the engine 102 may be configured to assume that an unknown/missing and/or rare category may have the same real-life contribution that any other category. The distribution of a missing/unknown value may follow the distribution of the contributions of anyvalues of the input variable.

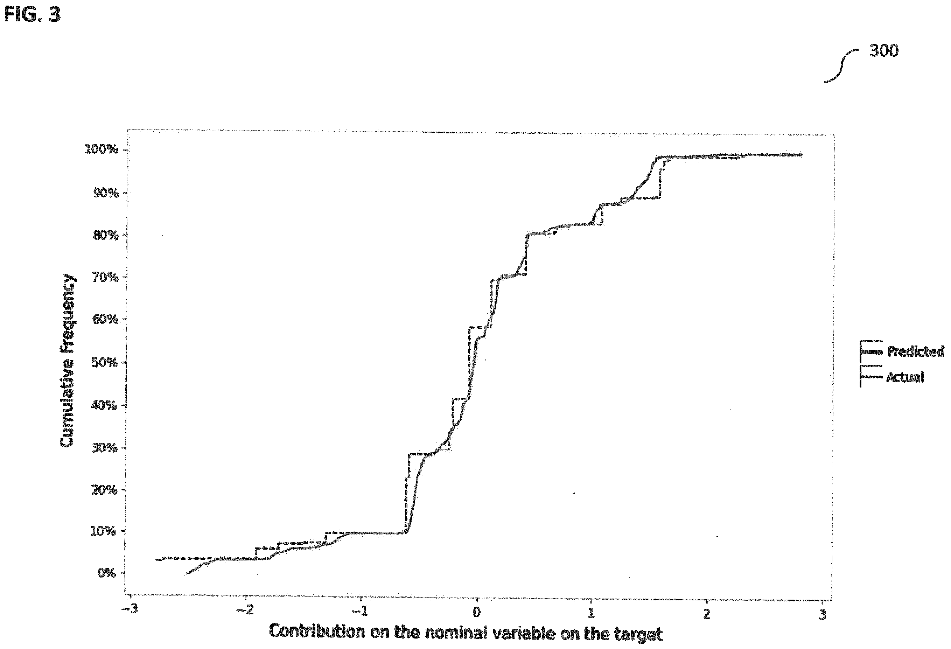

At 230, an uncertainty interval associated with contribution to the target by missing/unknown values for an input variable in the dataset (e.g., X) may be determined. Such determination may be made using any distribution (e.g., using a Gaussian distribution). Exemplary actual distribution of contributions of the values of a variable X are shown by a plot 300 shown in FIG. 3.

If at 206, the value for an input variable is not missing or unknown, the engine 102 (shown in FIG. 1) may be configured to execute a process associated with a determination of whether the value of an input variable is rare and/or corresponds to a rare category, at 208. At 210, the engine 102 may be configured to extract local contributions of the rare value to the predictive model and assume that a particular rare value may be randomly rare, at 212. The following exemplary code may be used to determine whether a category is rarely seen in a training dataset (resulting in Table 2 shown below):

```
       rare categories =validation_categories[(validation_calegories[validation_freq']>0)
       & (validation_categories['train_freq']>0)
       & (validation_categories[train_freq']<5)]
      predicted[np.isin(predicted['X'], rare_categories['X'])]
```

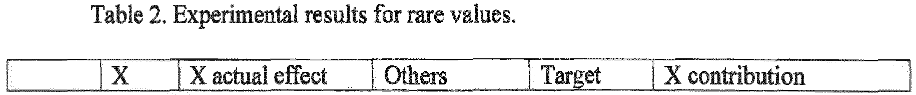

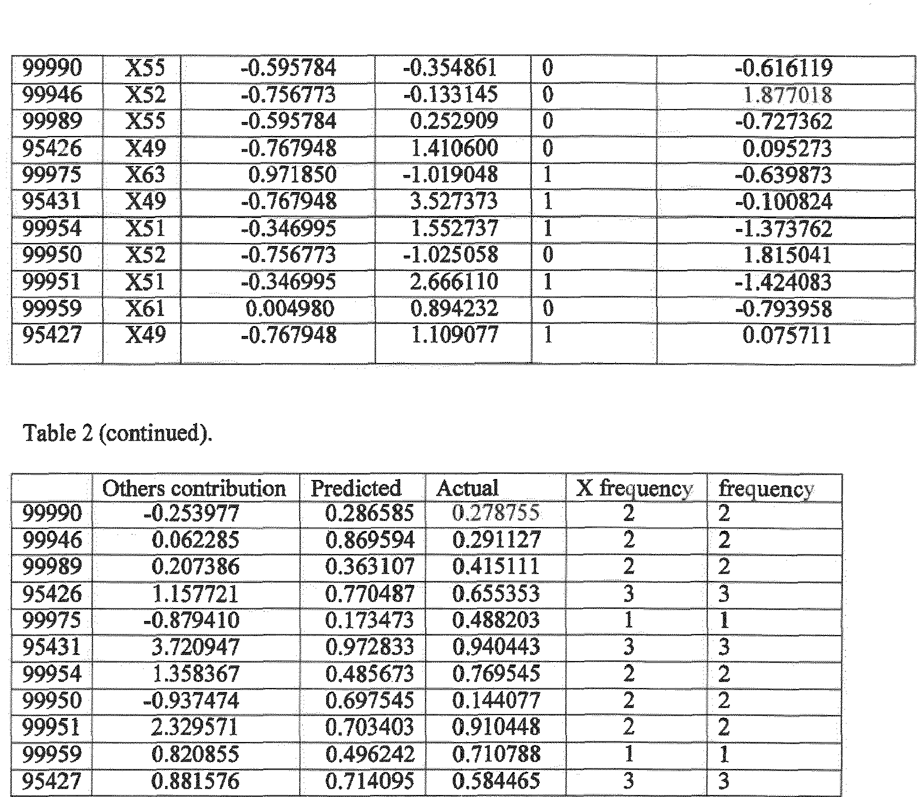

Thus, rare categories, e.g., those found only certain number of times in the training set, may have a substantial contribution to the prediction. To analyze how the machine learning process, executed by the engine 102, assigns contributions of very rare categories, the engine 102 may be configured to create another version of the training dataset to generate modified observations, where synthetic categories may be created from frequent source categories. To generate synthetic categories, the engine 102 may be configured to replace names of such categories (i.e., replace frequent category value with a fake rare category value) and assign to them a fixed occurrence frequency (e.g., a frequency of 10 or any other value), at 214. This may be accomplished using the following exemplary code.

```
       dfl = df.sample(frac=1)
      features = df1.columns.values
       dfl = df1.assign(frequency = df1.groupby(X')['X].transform('count'))
       FREQ = 10
       very_rare = df1[df1['frequency'] < FREQ+1]
       remaining = df1[df1['frequency'] >= FREQ+1]
       # Enough samples with rare categories
       SAMPLES = 1000
       # The samples may be picked from available data, when actual category frequency is
       above the frequency of interest
       sample = remaining[:SAMPLES]
       sample_source = sample.copy()
       data = remaining[SAMPLES:]
       sample = sample.assign(X_uid=sample.groupby('X')['X'].transform('cumcount'))
       sample['X_modified'] = sample['X'].astype('str') + '__' + sample['X_uid'].astype('str')
       sample['fold'] = 'sample'
       data = data.assign(X_ordinal=data.groupby('X')['X'].transform('cumcount'))
       data['X_uid] = data['X_ordinal'] // FREQ
       data = data.assign(X_uid_freq=data.groupby(['X,'X_uid])[X_uid'].transform('count'))
       data = pd.merge (data, sample[['X,'X_uid','X_modified']], on =['X','X_uid'], how='left')
       data['modified'] = -datar['X'modifted'].isnull() & (data['X_uid_freq'] == FREQ)
       data['X] = np.where(data['modified'], data['X_modified'], data['X'])
       data['fold'] = 'other'
       sample['X'] = sample['X_modified']
       unmodified = pd.concat([data[-data['modified']], very_rare])
       train = unmodified[:int(len(unmodified)∗0.8)]
       validation = unmodified[int(len(unmodified}∗0.8):]
       modified = data[data['modified']]
       train =pd.concat([train[features], modified[features]])
       validation = pd.concat((validation[features], sample[features]])
```

The engine 102 may verify that each synthetic category has the expected frequency in the training dataset. The naming convention for a synthetic or fake category may be *<source>*_*<uid>* where *<source>* is the name of the real category from which the synthetic or fake category has been derived, and *<uid>* is unique to the pair of categories (i.e., source category, synthetic/fake category).

The engine 102 may then execute training of the new predictive model that uses the generated training set, at 216. The modified training dataset is now composed from actual observations and observations containing the synthetic/fake categories. The target values may remain unchanged, and thus the actual effect of the synthetic rare categories may be the same as the effect of the actual source categories from which they were created. Here, the engine 102 may be configured to determine effect/contribution of fake categories, at 218.

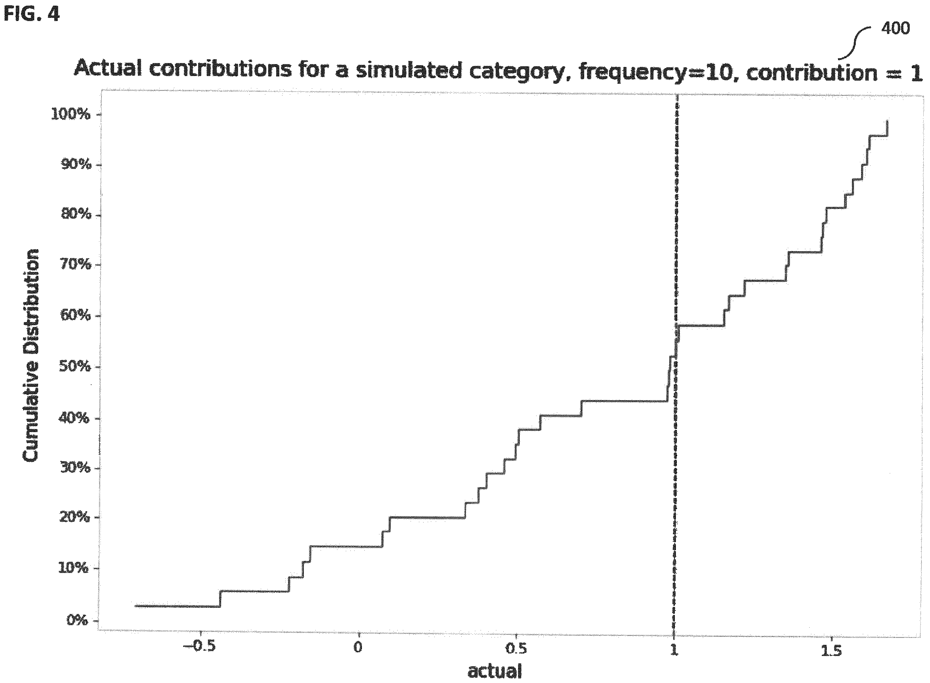

The process 200 may then proceed to determining distribution of the actual contributions of each category given a simulated contribution value, at 220, and, similar to the unknown/missing values case, generate an uncertainty interval for the contribution of the rare value, at 222. For example, the engine 102 may be configured to execute a simulation that may allow it to determine for a rare category, the distribution of its potentially real contribution given the contribution assigned to it by a predictive model. The distribution of potentially real contribution may be determined based on the contribution assigned to frequent categories made artificially rare. For example, as discussed above, for each predicted contribution assigned to a category of a given low frequency, the engine 102 may derive a distribution of actual contributions from categories that get a contribution close to the predicted contribution after being made artificially rare using the given low frequency. FIG. 4 illustrates an exemplary experimental plot 400 of such distribution, according to some implementations of the current subject matter.

By way of a non-limiting example, as shown in FIG. 4, approximately 90% of the categories that get a log-odds contribution equal to 1, when made artificially rare (i.e., frequency = 10), have a wide distribution of contributions when they are not altered. The engine 102 may be configured to analyze such distribution using standard statistical tools to derive an uncertainty interval for the actual contributions of rare categories. In the above example, assuming that the error on the contribution follows a Gaussian distribution, whenever the XAI framework extracts a contribution equal to 1 for a category encountered 10 times, the contribution and its uncertainty may be represented as:
^{∗} 1 +/- 0.66
^{∗} from 0.33 to 1.66
^{∗} "positive" or "highly positive"

The uncertainty about the contribution from a rare, unknown and/or missing category may be a source of uncertainty about the prediction itself. Further, the uncertainty from multiple rare categories from several variables, may be analyzed to derive their combined contribution to the uncertainty about the prediction. Subsequent to the above analysis, the engine 102 may be configured to generate (and/or transmit) an appropriate notification, an alert, and/or a trigger to indicate viability of the predictions.

In some implementations, the current subject matter can be implemented in various in-memory database systems, such as a High-Performance Analytic Appliance ("HANA") system as developed by SAP SE, Walldorf, Germany. Various systems, such as, enterprise resource planning ("ERP") system, supply chain management ("SCM") system, supplier relationship management ("SRM") system, customer relationship management ("CRM") system, and/or others, can interact with the in-memory system for the purposes of accessing data, for example. Other systems and/or combinations of systems can be used for implementations of the current subject matter. The following is a discussion of an exemplary in-memory system.

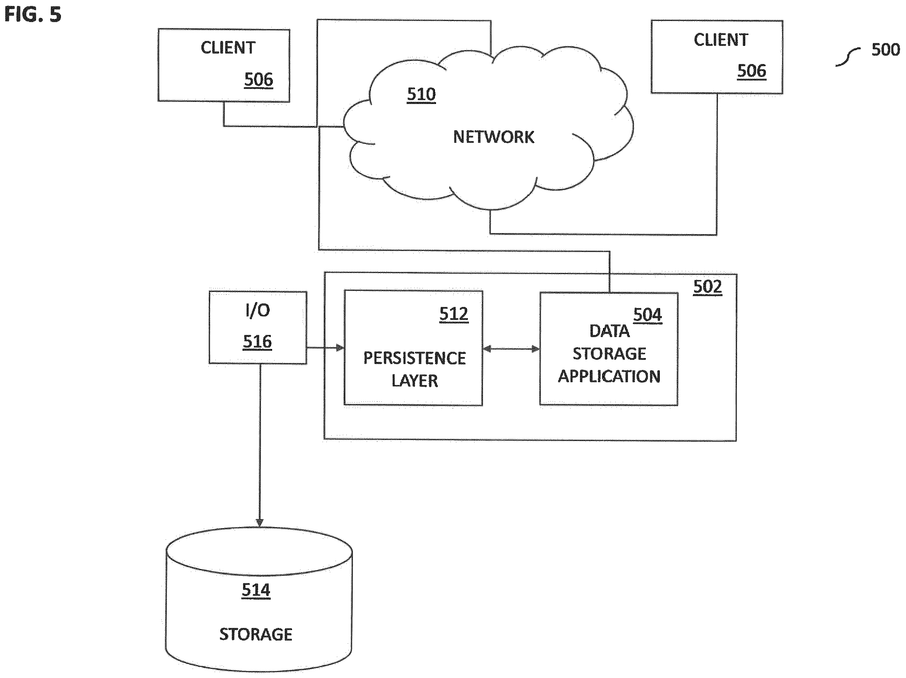

FIG. 5 illustrates an exemplary system 500 in which a computing system 502, which can include one or more programmable processors that can be collocated, linked over one or more networks, etc., executes one or more modules, software components, or the like of a data storage application 504, according to some implementations of the current subject matter. The data storage application 504 can include one or more of a database, an enterprise resource program, a distributed storage system (e.g. NetApp Filer available from NetApp of Sunnyvale, CA), or the like.

The one or more modules, software components, or the like can be accessible to local users of the computing system 502 as well as to remote users accessing the computing system 502 from one or more client machines 506 over a network connection 510. One or more user interface screens produced by the one or more first modules can be displayed to a user, either via a local display or via a display associated with one of the client machines 506. Data units of the data storage application 504 can be transiently stored in a persistence layer 512 (e.g., a page buffer or other type of temporary persistency layer), which can write the data, in the form of storage pages, to one or more storages 514, for example via an input/output component 516. The one or more storages 514 can include one or more physical storage media or devices (e.g. hard disk drives, persistent flash memory, random access memory, optical media, magnetic media, and the like) configured for writing data for longer term storage. It should be noted that the storage 514 and the input/output component 516 can be included in the computing system 502 despite their being shown as external to the computing system 502 in FIG. 5.

Data retained at the longer term storage 514 can be organized in pages, each of which has allocated to it a defined amount of storage space. In some implementations, the amount of storage space allocated to each page can be constant and fixed. However, other implementations in which the amount of storage space allocated to each page can vary are also within the scope of the current subject matter.

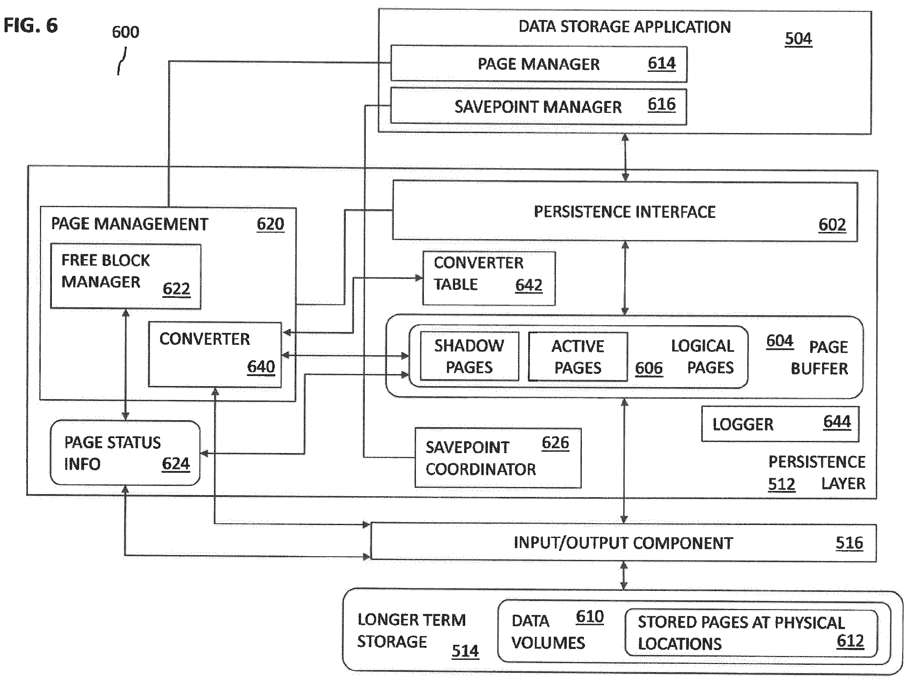

FIG. 6 illustrates exemplary software architecture 600, according to some implementations of the current subject matter. A data storage application 504, which can be implemented in one or more of hardware and software, can include one or more of a database application, a network-attached storage system, or the like. According to at least some implementations of the current subject matter, such a data storage application 504 can include or otherwise interface with a persistence layer 512 or other type of memory buffer, for example via a persistence interface 602. A page buffer 604 within the persistence layer 512 can store one or more logical pages 606, and optionally can include shadow pages, active pages, and the like. The logical pages 606 retained in the persistence layer 512 can be written to a storage (e.g. a longer term storage, etc.) 514 via an input/output component 516, which can be a software module, a sub-system implemented in one or more of software and hardware, or the like. The storage 514 can include one or more data volumes 610 where stored pages 612 are allocated at physical memory blocks.

In some implementations, the data storage application 504 can include or be otherwise in communication with a page manager 614 and/or a savepoint manager 616. The page manager 614 can communicate with a page management module 620 at the persistence layer 512 that can include a free block manager 622 that monitors page status information 624, for example the status of physical pages within the storage 514 and logical pages in the persistence layer 512 (and optionally in the page buffer 604). The savepoint manager 616 can communicate with a savepoint coordinator 626 at the persistence layer 512 to handle savepoints, which are used to create a consistent persistent state of the database for restart after a possible crash.

In some implementations of a data storage application 504, the page management module of the persistence layer 512 can implement a shadow paging. The free block manager 622 within the page management module 620 can maintain the status of physical pages. The page buffer 604 can include a fixed page status buffer that operates as discussed herein. A converter component 640, which can be part of or in communication with the page management module 620, can be responsible for mapping between logical and physical pages written to the storage 514. The converter 640 can maintain the current mapping of logical pages to the corresponding physical pages in a converter table 642. The converter 640 can maintain a current mapping of logical pages 606 to the corresponding physical pages in one or more converter tables 642. When a logical page 606 is read from storage 514, the storage page to be loaded can be looked up from the one or more converter tables 642 using the converter 640. When a logical page is written to storage 514 the first time after a savepoint, a new free physical page is assigned to the logical page. The free block manager 622 marks the new physical page as "used" and the new mapping is stored in the one or more converter tables 642.

The persistence layer 512 can ensure that changes made in the data storage application 504 are durable and that the data storage application 504 can be restored to a most recent committed state after a restart. Writing data to the storage 514 need not be synchronized with the end of the writing transaction. As such, uncommitted changes can be written to disk and committed changes may not yet be written to disk when a writing transaction is finished. After a system crash, changes made by transactions that were not finished can be rolled back. Changes occurring by already committed transactions should not be lost in this process. A logger component 644 can also be included to store the changes made to the data of the data storage application in a linear log. The logger component 644 can be used during recovery to replay operations since a last savepoint to ensure that all operations are applied to the data and that transactions with a logged "commit" record are committed before rolling back still-open transactions at the end of a recovery process.

With some data storage applications, writing data to a disk is not necessarily synchronized with the end of the writing transaction. Situations can occur in which uncommitted changes are written to disk and while, at the same time, committed changes are not yet written to disk when the writing transaction is finished. After a system crash, changes made by transactions that were not finished must be rolled back and changes by committed transaction must not be lost.

To ensure that committed changes are not lost, redo log information can be written by the logger component 644 whenever a change is made. This information can be written to disk at latest when the transaction ends. The log entries can be persisted in separate log volumes while normal data is written to data volumes. With a redo log, committed changes can be restored even if the corresponding data pages were not written to disk. For undoing uncommitted changes, the persistence layer 512 can use a combination of undo log entries (from one or more logs) and shadow paging.

The persistence interface 602 can handle read and write requests of stores (e.g., in-memory stores, etc.). The persistence interface 602 can also provide write methods for writing data both with logging and without logging. If the logged write operations are used, the persistence interface 602 invokes the logger 644. In addition, the logger 644 provides an interface that allows stores (e.g., in-memory stores, etc.) to directly add log entries into a log queue. The logger interface also provides methods to request that log entries in the in-memory log queue are flushed to disk.

Log entries contain a log sequence number, the type of the log entry and the identifier of the transaction. Depending on the operation type additional information is logged by the logger 644. For an entry of type "update", for example, this would be the identification of the affected record and the after image of the modified data.

When the data application 504 is restarted, the log entries need to be processed. To speed up this process the redo log is not always processed from the beginning. Instead, as stated above, savepoints can be periodically performed that write all changes to disk that were made (e.g., in memory, etc.) since the last savepoint. When starting up the system, only the logs created after the last savepoint need to be processed. After the next backup operation the old log entries before the savepoint position can be removed.

When the logger 644 is invoked for writing log entries, it does not immediately write to disk. Instead it can put the log entries into a log queue in memory. The entries in the log queue can be written to disk at the latest when the corresponding transaction is finished (committed or aborted). To guarantee that the committed changes are not lost, the commit operation is not successfully finished before the corresponding log entries are flushed to disk. Writing log queue entries to disk can also be triggered by other events, for example when log queue pages are full or when a savepoint is performed.

With the current subject matter, the logger 644 can write a database log (or simply referred to herein as a "log") sequentially into a memory buffer in natural order (e.g., sequential order, etc.). If several physical hard disks / storage devices are used to store log data, several log partitions can be defined. Thereafter, the logger 644 (which as stated above acts to generate and organize log data) can load-balance writing to log buffers over all available log partitions. In some cases, the load-balancing is according to a round-robin distributions scheme in which various writing operations are directed to log buffers in a sequential and continuous manner. With this arrangement, log buffers written to a single log segment of a particular partition of a multi-partition log are not consecutive. However, the log buffers can be reordered from log segments of all partitions during recovery to the proper order.

As stated above, the data storage application 504 can use shadow paging so that the savepoint manager 616 can write a transactionally-consistent savepoint. With such an arrangement, a data backup comprises a copy of all data pages contained in a particular savepoint, which was done as the first step of the data backup process. The current subject matter can be also applied to other types of data page storage.

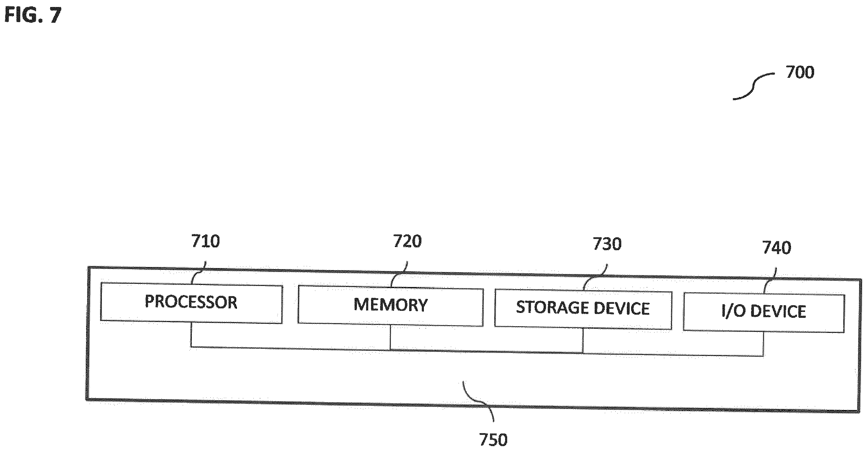

In some implementations, the current subject matter can be configured to be implemented in a system 700, as shown in FIG. 7. The system 700 can include a processor 710, a memory 720, a storage device 730, and an input/output device 740. Each of the components 710, 720, 730 and 740 can be interconnected using a system bus 750. The processor 710 can be configured to process instructions for execution within the system 700. In some implementations, the processor 710 can be a single-threaded processor. In alternate implementations, the processor 710 can be a multi-threaded processor. The processor 710 can be further configured to process instructions stored in the memory 720 or on the storage device 730, including receiving or sending information through the input/output device 740. The memory 720 can store information within the system 700. In some implementations, the memory 720 can be a computer-readable medium. In alternate implementations, the memory 720 can be a volatile memory unit. In yet some implementations, the memory 720 can be a non-volatile memory unit. The storage device 730 can be capable of providing mass storage for the system 700. In some implementations, the storage device 730 can be a computer-readable medium. In alternate implementations, the storage device 730 can be a floppy disk device, a hard disk device, an optical disk device, a tape device, non-volatile solid state memory, or any other type of storage device. The input/output device 740 can be configured to provide input/output operations for the system 700. In some implementations, the input/output device 740 can include a keyboard and/or pointing device. In alternate implementations, the input/output device 740 can include a display unit for displaying graphical user interfaces.

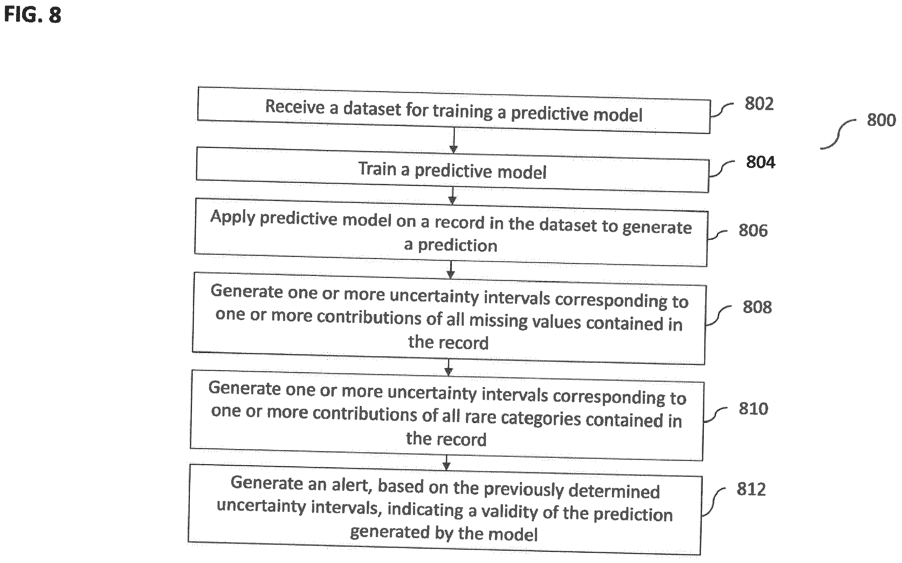

FIG. 8 illustrates an exemplary method 800 for determining uncertainties associated with a predictive modeling environment executed by computing systems, according to some implementations of the current subject matter. The method 800 may be executed by the system 100, and in particular the processing engine 102, as shown in FIG. 1. The method 800 may implement the techniques discussed above in connection with FIGS. 2-5.

At 802, the engine 102 processor may be configured to receive a dataset for training a predictive model. The dataset may include a plurality of variables associated with one or more values. The predictive model may be configured to be used for determination of a target value as a function of one or more variables in the plurality of variables. At 804, the predictive model may be trained. Training of the predictive model may include training the model using the received dataset. In some implementations, the model may be separately trained using the received dataset having one or more altered variables (e.g., variables with values in fake categories, as discussed above), as is performed at 810. At 806, the predictive model may be applied to one or more variables and/or a record in the received dataset to generate a prediction. At 808, one or more uncertainty intervals corresponding to one or more contributions of one or more missing values corresponding to one or more variables in the plurality of variables may be generated. At 810, one or more uncertainty intervals corresponding to one or more contributions of one or more rare values corresponding to one or more variables in the plurality of variables may be generated. At 812, the engine 102 may generate an alert indicative of the prediction based on the one or more generated uncertainty intervals.

In some implementations, the current subject matter can include one or more of the following optional features. At least one variable in the dataset may have an unknown or missing value. The unknown or missing value may be a randomly unknown or randomly missing value. In some implementations, generation of the uncertainty intervals may include generating one or more uncertainty intervals based on a distribution of contributions assigned to all values of the variables in the received dataset. At least one variable in the received dataset may have a value assigned to a rare category. The value assigned to the rare category may be a randomly occurring value assigned to the rare category. In some implementations, generation of the uncertainty intervals may include generating one or more uncertainty intervals on an actual contribution of a rare value based on a contribution value assigned by the predictive model.

The systems and methods disclosed herein can be embodied in various forms including, for example, a data processor, such as a computer that also includes a database, digital electronic circuitry, firmware, software, or in combinations of them. Moreover, the above-noted features and other aspects and principles of the present disclosed implementations can be implemented in various environments. Such environments and related applications can be specially constructed for performing the various processes and operations according to the disclosed implementations or they can include a general-purpose computer or computing platform selectively activated or reconfigured by code to provide the necessary functionality. The processes disclosed herein are not inherently related to any particular computer, network, architecture, environment, or other apparatus, and can be implemented by a suitable combination of hardware, software, and/or firmware. For example, various general-purpose machines can be used with programs written in accordance with teachings of the disclosed implementations, or it can be more convenient to construct a specialized apparatus or system to perform the required methods and techniques.

The systems and methods disclosed herein can be implemented as a computer program product, i.e., a computer program tangibly embodied in an information carrier, e.g., in a machine readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

As used herein, the term "user" can refer to any entity including a person or a computer.

Although ordinal numbers such as first, second, and the like can, in some situations, relate to an order; as used in this document ordinal numbers do not necessarily imply an order. For example, ordinal numbers can be merely used to distinguish one item from another. For example, to distinguish a first event from a second event, but need not imply any chronological ordering or a fixed reference system (such that a first event in one paragraph of the description can be different from a first event in another paragraph of the description).

The foregoing description is intended to illustrate but not to limit the scope of the invention, which is defined by the scope of the appended claims. Other implementations are within the scope of the following claims.

These computer programs, which can also be referred to programs, software, software applications, applications, components, or code, include machine instructions for a programmable processor, and can be implemented in a high-level procedural and/or objectoriented programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid state memory or a magnetic hard drive or any equivalent storage medium. The machine-readable medium can alternatively or additionally store such machine instructions in a transient manner, such as for example as would a processor cache or other random access memory associated with one or more physical processor cores.

To provide for interaction with a user, the subject matter described herein can be implemented on a computer having a display device, such as for example a cathode ray tube (CRT) or a liquid crystal display (LCD) monitor for displaying information to the user and a keyboard and a pointing device, such as for example a mouse or a trackball, by which the user can provide input to the computer. Other kinds of devices can be used to provide for interaction with a user as well. For example, feedback provided to the user can be any form of sensory feedback, such as for example visual feedback, auditory feedback, or tactile feedback; and input from the user can be received in any form, including, but not limited to, acoustic, speech, or tactile input.

The subject matter described herein can be implemented in a computing system that includes a back-end component, such as for example one or more data servers, or that includes a middleware component, such as for example one or more application servers, or that includes a front-end component, such as for example one or more client computers having a graphical user interface or a Web browser through which a user can interact with an implementation of the subject matter described herein, or any combination of such back-end, middleware, or front-end components. The components of the system can be interconnected by any form or medium of digital data communication, such as for example a communication network. Examples of communication networks include, but are not limited to, a local area network ("LAN"), a wide area network ("WAN"), and the Internet.

The computing system can include clients and servers. A client and server are generally, but not exclusively, remote from each other and typically interact through a communication network. The relationship of client and server arises by virtue of computer programs running on the respective computers and having a client-server relationship to each other.

The implementations set forth in the foregoing description do not represent all implementations consistent with the subject matter described herein. Instead, they are merely some examples consistent with aspects related to the described subject matter. Although a few variations have been described in detail above, other modifications or additions are possible. In particular, further features and/or variations can be provided in addition to those set forth herein. For example, the implementations described above can be directed to various combinations and sub-combinations of the disclosed features and/or combinations and sub-combinations of several further features disclosed above. In addition, the logic flows depicted in the accompanying figures and/or described herein do not necessarily require the particular order shown, or sequential order, to achieve desirable results. Other implementations can be within the scope of the following claims.

## Claims

1. A computer-implemented method, comprising:
receiving, by at least one processor, a dataset for training a predictive model, the dataset including a plurality of variables associated with one or more values, the predictive model is configured for determination of a target value as a function of one or more variables in the plurality of variables;
training, by at least one processor, the predictive model, wherein the predictive model is trained using the received dataset;
applying, by at least one processor, the predictive model to one or more variables in the received dataset to generate a prediction;
generating, by at least one processor, based on the applying, one or more uncertainty intervals corresponding to one or more contributions of one or more missing values corresponding to one or more variables in the plurality of variables;
generating, by at least one processor, based on the applying, one or more uncertainty intervals corresponding to one or more contributions of one or more rare values corresponding to one or more variables in the plurality of variables; and
generating, by the at least one processor, an alert indicative of the prediction, based on the one or more generated uncertainty intervals.

2. The method according to claim 1, wherein at least one variable in the dataset has an unknown or missing value,
wherein, optionally, the unknown or missing value is a randomly unknown or randomly missing value.

3. The method according to claim 1 or 2, wherein the generating of the one or more uncertainty intervals is based on a distribution of contributions assigned to all values of the variables in the received dataset.

4. The method according to any one of claims 1 to 3, wherein at least one variable in the received dataset has a value assigned to a rare category,
wherein, optionally, the value assigned to the rare category is a randomly occurring value.

5. The method according to any one of claims 1 to 4, wherein the generating of the one or more uncertainty intervals includes generating one or more uncertainty intervals on an actual contribution of a rare value based on a contribution value assigned by the predictive model.

6. A system comprising:
at least one programmable processor; and
a non-transitory machine-readable medium storing instructions that, when executed by the at least one programmable processor, cause the at least one programmable processor to perform operations comprising:
receiving, by at least one processor, a dataset for training a predictive model, the dataset including a plurality of variables associated with one or more values, the predictive model is configured for determination of a target value as a function of one or more variables in the plurality of variables;
training, by at least one processor, the predictive model, wherein the predictive model is trained using the received dataset;
applying, by at least one processor, the predictive model to one or more variables in the received dataset to generate a prediction;
generating, by at least one processor, based on the applying, one or more uncertainty intervals corresponding to one or more contributions of one or more missing values corresponding to one or more variables in the plurality of variables;
generating, by at least one processor, based on the applying, one or more uncertainty intervals corresponding to one or more contributions of one or more rare values corresponding to one or more variables in the plurality of variables; and
generating, by the at least one processor, an alert indicative of the prediction, based on the one or more generated uncertainty intervals.

7. The system according to claim 6, wherein at least one variable in the dataset has an unknown or missing value,
wherein, optionally, the unknown or missing value is a randomly unknown or randomly missing value.

8. The system according to claim 6 or 7, wherein the generating of the one or more uncertainty intervals is based on a distribution of contributions assigned to all values of the variables in the received dataset.

9. The system according to any one of claims 6 to 8, wherein at least one variable in the received dataset has a value assigned to a rare category,
wherein, optionally, the value assigned to the rare category is a randomly occurring value.

10. The system according to any one of claims 6 to 9, wherein the generating of the one or more uncertainty intervals includes generating one or more uncertainty intervals on an actual contribution of a rare value based on a contribution value assigned by the predictive model.

11. A computer program product comprising a non-transitory machine-readable medium storing instructions that, when executed by at least one programmable processor, cause the at least one programmable processor to perform operations comprising:
receiving, by at least one processor, a dataset for training a predictive model, the dataset including a plurality of variables associated with one or more values, the predictive model is configured for determination of a target value as a function of one or more variables in the plurality of variables;
training, by at least one processor, the predictive model, wherein the predictive model is trained using the received dataset;
applying, by at least one processor, the predictive model to one or more variables in the received dataset to generate a prediction;
generating, by at least one processor, based on the applying, one or more uncertainty intervals corresponding to one or more contributions of one or more missing values corresponding to one or more variables in the plurality of variables;
generating, by at least one processor, based on the applying, one or more uncertainty intervals corresponding to one or more contributions of one or more rare values corresponding to one or more variables in the plurality of variables; and
generating, by the at least one processor, an alert indicative of the prediction, based on the one or more generated uncertainty intervals.

12. The computer program product according to claim 11, wherein at least one variable in the dataset has an unknown or missing value,
wherein, optionally, the unknown or missing value is a randomly unknown or randomly missing value.

13. The computer program product according to claim 11 or 12, wherein the generating of the one or more uncertainty intervals is based on a distribution of contributions assigned to all values of the variables in the received dataset.

14. The computer program product according to any one of claims 11 to 13, wherein at least one variable in the received dataset has a value assigned to a rare category.

15. The computer program product according to any one of claims 11 to 14, wherein the generating of the one or more uncertainty intervals includes generating one or more uncertainty intervals on an actual contribution of a rare value based on a contribution value assigned by the predictive model.
